# EUROPEAN PATENT SPECIFICATION

(11) **EP 2 663 105 B1**
(45) Date of publication and mention of the grant of the patent: **08.08.2018**
(21) Application number: 13163721.7
(22) Date of filing: 15.04.2013
(51) Int. Cl.: H04W 8/00, H04W 68/00

(54) **Method for determining the number of user equipments in a geographic area of an access network, user equipment for use in a geographic area of an access network, base transceiver station for determining the number of user equipments in a geographic area of an access network, program and computer program product**
Verfahren zur Bestimmung der Zahl von Benutzerendgeräten in einem geographischen Gebiet eines Zugangsnetzwerks, Benutzerendgerät zur Verwendung in einem geographischen Gebiet eines Zugangsnetzwerks, Basisstations-Sender-Empfängerstation zur Bestimmung der Anzahl von Benutzerendgeräten in einem geographischen Gebiet eines Zugangsnetzwerks, Programm und Computerprogrammprodukt
Procédé pour déterminer le nombre d'équipements utilisateurs dans une zone géographique d'un réseau d'accès, équipement d'utilisateur pour une utilisation dans une zone géographique d'un réseau d'accès, station émettrice-réceptrice de base pour déterminer le nombre d'équipements utilisateurs dans une zone géographique d'un réseau d'accès, programme et produit de programme informatique

(30) Priority: 07.05.2012 DE 102012008866
(43) Date of publication of application: 13.11.2013
(73) Proprietor: Deutsche Telekom AG, 53113 Bonn (DE); T-Mobile International Austria GmbH, 1030 Wien (AT)
(72) Inventor: Lehser, Frank, 53175 Bonn (DE); Neubacher, Andreas, 2100 Korneuburg (AT); Klatt, Axel, 50999 Köln (DE)
(74) Representative: Schwöbel, Thilo K.

(56) References cited:
- EP-A1- 2 360 976
- WO-A1-2011/100497
- US-A1- 2012 076 085

## Description

### BACKGROUND

The present invention relates a method for determining the number of user equipment in a geographic area of an access network of a public land mobile network.

The present invention further relates to a user equipment for use in a geographic area of an access network of a public land mobile network, and to a base transceiver station for determining the number of user equipments in a geographic area of an access network of a public land mobile network.

The procedure to track the location of a user or of a user equipment in a public land mobile network and to notify user equipments about incoming connection requests is important for the functionality of mobile networks. The possibility to locate a user or a user equipment is important, e.g., for a voice call and more generally in any case that data of other network entities, like gateways etc., are to be sent to a specific user equipment.

Generally, there are two possible schemes to track the location of a user equipment:
(1) The user equipment does announce its presence within a certain radio cell at each radio cell change while moving between different radio cells of the public land mobile network. The public land mobile network keeps track about each and every radio cell change.
(2) The user equipment is paged (i.e. the base transceiver station of a radio cell or of a plurality of radio cells transmit a certain identification which is associated with a certain user equipment on the broadcast channel) and it is indicated to the user equipment to contact the base transceiver station (or another node of the public land mobile network), i.e. to make the public land mobile network aware about the current cell the user equipment is currently camping on.
Both schemes have benefits and drawbacks depending on the mobility pattern of user equipments. While according to the first scheme, rather static (i.e. non moving) user equipments benefit from the necessity of only a rather small number of signalling occasions, i.e. a minimum of signalling requirements, (as the locations of the different user equipments are known to the public land mobile network due to the last radio cell change), this scheme has drawbacks in case that user equipments are frequently changing their locations. This is because any user equipment has to inform the public land mobile network about its current location at each radio cell change, i.e. the first scheme causes a rather important need for signalling between the user equipments on the one hand and the public land mobile network on the other hand.
On the contrary, the second scheme has benefits in case of rather fast moving (i.e. very mobile) user equipments as only a minimum of signalling occurs in case of such fast moving user equipments since the user equipment does not have to announce its presence at each radio cell change and thus there is rather limited signalling in case the user equipment moves between different locations of the public land mobile network. However, the second scheme leads to a rather high signalling load in many radio cells in case the user equipment needs to be paged since (due to the fact that the public land mobile network is not aware about the precise location of the user equipment) paging messages need to be broadcast in many or all radio cells while the user equipment is only present in one radio cell.
In order to keep the related signalling between different nodes or components of the public land mobile network as well as between the user equipment and the nodes of the public land mobile network comparably low, the two tracking schemes are combined in 2G (second generation) public land mobile networks (such as the GERAN (GSM EDGE Radio Access Network) network), in 3G (third generation) public land mobile networks (such as the UTRAN (UMTS Terrestrial Radio Access Network) network, and in 4G (fourth generation) public land mobile networks (such as the E-UTRAN (Evolved UTRAN) network).
In 2G public land mobile networks, a number of radio cells can be combined to a so called location area (LA). Within a location area, which is identified by a specific identifier on the broadcast channel, the user equipment is allowed to freely move within the location area and to camp on each radio cell (i.e. to have a radio connection to the respective base transceiver station of the radio cell) without the need to notify the public land mobile network. Just in case the user equipment changes between radio cells which are members of different location areas, the user equipment has to inform the network that, in case of a paging need, the user equipment has to be paged in the new location area. Such a combined scheme of tracking a user equipment allows - depending on the network planning - to find a trade off between, on the one hand, the signalling needs for the signalling for location update reasons between the user equipment and the public land mobile network and, on the other hand, the signalling needs on broadcast channels within radio cells for paging purposes.
Other tracking schemes to cope with user equipment mobility are implemented in UTRAN public land mobile networks, allowing to track a user equipment on different location granularity, either on location area level, UTRAN tracking area level or even the radio cell level (for a limited number of user equipments).

However, knowledge about whether a user equipment is within a coverage range of a certain radio cell would be beneficial, especially for counting purposes of user equipments within a specific radio cell.

In current public land mobile networks of the second, third and fourth generation (GERAN, UTRAN, E-UTRAN) as well as in other radio access technologies, paging requests are
-- originated by hierarchically higher network elements or network entities, like the MSC (Mobile Switching Center), SGSN (Serving GPRS Support Node), MME (Mobility Management Entity), etc., and
-- dedicated to a single user equipment in order to make it aware about incoming calls or messages, connection requests or data to be received by that specific user equipment from the hierarchically higher network element or network entity.
EP 2 360 976 A1 and WO 2011/100497 A1 describe methods and systems for performing group paging. Therefore, an a priori knowledge about the user equipment to be paged is needed in order to contact a specific user equipment.

### SUMMARY

An object of the present invention is to provide a simple solution for determining the number of user equipment in a geographic area of an access network of a public land mobile network.

The invention is defined by the features of independent claims 1, 8, 11, 13 and 14. Further preferred embodiments are defined by the dependent claims.
The embodiments and/or examples of the following description which are not covered by the appended claims are considered as not being part of the present invention.

It is thereby advantageously possible according to the present invention that a request in the form of the pool paging information element can be sent from the base transceiver station to the user equipments of the plurality of user equipments to provide the identity information element. It is especially advantageous that the base transceiver station, when sending the pool paging information element, does not need to indicate or specify any user equipment individually (e.g. by means of indicating a user equipment specific identity information such as an IMSI number or the like) but it is possible to broadcast the pool paging information element, to all user equipments that camp on the radio cell served by the base transceiver station or at least to all user equipments that belong to a pool paging group.

According to the present invention, it is advantageously possible that the identity information element provides an information about the identity of the user equipment such that a first user equipment can be distinguished or discriminated from a second user equipment.

However, the identity information element does not necessarily need to comprise the information about the identity of the user equipment such that the identity of the user (of that user equipment) can be derived from such an information about the identity. Thereby, it is advantageously possible according to the present invention that the level of data privacy protection of personal data of users within the public land mobile network can be enhanced - or is not reduced by the implementation of the inventive method - because the base transceiver stations of the public land mobile network are able to distinguish between different user equipments (and preferably and advantageously are also able to obtain (general) information about different user equipments, such as the respective capabilities or type of user equipment) and are therefore enabled to provide an enhanced service level but do not have access to individual and personal data or information regarding the user equipments camping on the base transceiver station. For example, it is possible and preferred according to the present invention that instead of the transmission of, e.g., the IMSI number of a user equipment, a number derived from the IMSI number (e.g. the IMSI number in an encrypted form) according to a predefined algorithm is transmitted to the base transceiver station as part of the identity information element.

A further advantage according to the present invention relates to a reduction of signalling traffic compared to applying a conventional paging procedure to all user equipments within the coverage area of the base transceiver station: As conventional paging requests are originated by hierarchically higher network elements or network entities (like the MSC (Mobile Switching Center), SGSN (Serving GPRS Support Node), MME (Mobility Management Entity)), the conventional paging process involves a signalling traffic not only between the user equipment and the base transceiver station but also between the base transceiver station and these hierarchically higher network elements. This additional signalling traffic can be eliminated or at least greatly reduced according to the present invention as the knowledge about the number of user equipments - especially those user equipments in idle mode - is only needed locally at the base transceiver station.

According to the present invention, it is advantageous that knowledge exists at the base transceiver station about the number of user equipments - especially user equipments in a passive mode or in idle mode - within the coverage area of the base transceiver station.
For energy saving reasons of the base transceiver station, an a priori knowledge about the number of user equipments within the coverage area of the base transceiver station is important to derive an accurate decision, e.g. whether the transceiver of the base transceiver station can be switched off for energy saving reasons. E.g. in case that there are many user equipments in a passive mode (i.e. in idle mode) within the coverage area of the base transceiver station, the base transceiver station may not be switched off since the likelihood that a certain number of user equipments will have the need for connectivity within a certain time can be high.
Furthermore, with an increasing number of machine to machine devices (such as meters, vending machines or the like), there is a high likelihood that a certain number of devices, i.e. user equipments, are rather located at fixed places and - during normal usage - do not move at all. The knowledge about which base transceiver stations within the public land mobile network provide the coverage to such user equipments (as well as a capability reporting of such user equipments such as "fixed machine to machine device") is beneficial and allows to greatly enhance the paging signalling, since such devices (user equipments) do not need to be paged in wider areas (such as the complete respective location area or tracking area) than the respective radio cell of the base transceiver station.
Additionally, for operation and maintenance reasons, especially for an end to end connectivity check, the knowledge about the availability of idle mode user equipments within the coverage area of the base transceiver station is allowing an end to end connectivity check and to identify possible otherwise non-detectable failures on the radio frequency units, especially of the base transceiver station.
Furthermore, applications such as
-- the dynamical allocation of spectrum to different radio access technologies or
-- the adaption of cell reselection parameters (e.g. in case of radio cells of different radio access technologies are colocated) or
-- direct to direct communication applications (e.g. to provide assistance to the user equipment as a direct to direct device regarding switching to a proximity discovery functionality)
also benefit from the knowledge about the number of user equipments -especially the respective number of user equipments capable of certain radio access technologies - within the radio coverage area of a base transceiver station.

According to a preferred embodiment of the present invention, the control signals received by the user equipments from the base transceiver station are sent on a paging channel of the base transceiver station.

Thereby, it is advantageously possible to easily reach all user equipments served by the base transceiver station, even such user equipments that are in a passive mode, especially in the idle mode. Typically, user equipments are configured to save power consumption as much as possible to enhance standby times. Therefore, public land mobile networks implement the concept of discontinuous reception (DRX). This concept allows battery powered devices like mobile phones as user equipments to optimise the power consumption by implementing a so-called "sleep mode" most of the time while no communication is ongoing. Typically, "wakeup-times" are defined during which the user equipments can be reached by the paging channel of the base transceiver station.

Since a high number of user equipments camping on the base transceiver station also means that potentially a high number of identity information elements are sent back to the base transceiver station in case of the base transceiver station sending a pool paging information element, the present invention provides possibilities that the user equipments receiving the pool paging information element respond in a coordinated manner.

According to a preferred embodiment of the present invention, a pool paging group identifier is assigned to each user equipment of the plurality of user equipments, wherein the pool paging information element comprises the pool paging group identifier, wherein a user equipment of plurality of user equipments sends the identity information element solely in case that the assigned pool paging group identifier matches the pool paging group identifier of the pool paging information element.

Thereby, it is advantageously possible to avoid overload situations of the radio communication within the radio cell as well as overload situations of the base transceiver station. With the definition of paging groups for the new pool paging mechanism, it is advantageously possible according to the present invention to avoid that too many user equipments simultaneously receive the pool paging information element and in turn try to provide the identity information element to the base transceiver station.

The use of paging groups to define a plurality of user equipments (out of all the user equipments camping in the radio cell of a specific base transceiver station) that are requested to respond to an pool paging information element has the further advantage that there might be situation where the process of determining the number of user equipments in a radio cell does not need to be conducted completely. Such a situation refers, e.g., to the situation where the question arises whether a base transceiver station should be switched off for energy saving reasons due to low traffic. If, in such a situation, already for one paging group a sufficient number of idle mode user equipment answer (by means of an identity information element) to the pool paging information element sent from the base transceiver station, then it is clear that the base transceiver station cannot be switched off. Regarding this peculiar question or situation, the inventive method does not need to be performed also for the other paging groups.

According to a further preferred embodiment of the present invention, the pool paging group identifier is assigned to each user equipment of the plurality of user equipments at the user equipments entering the location area, the registration area and/or the tracking area of the base transceiver station.

Thereby, it is advantageously possible to easily assign the paging group of the pool paging mechanism. For example, the pool paging group identifier to be assigned to a specific user equipment is derived from the IMSI number of that user equipment.

According to the present invention, it is furthermore preferred that the identification information element comprises an indication related to the identity of the user equipment and at least one out of the following pieces of information:
-- an indication related to the current status of the user equipment,
-- an indication related to the capabilities of the user equipment,
-- an indication related to a record of previous usage of the user equipment,
wherein the indication related to the capabilities of the user equipment especially relates to an information regarding to: the possible set of radio access technologies the user equipment is able to be used, and/or the device category of the user equipment, and/or the user category assigned to the user equipment.

Thereby, it is advantageously possible according to the present invention that the base transceiver station not only receives information about the existence of the respective user equipment but also regarding the capabilities of the user equipment and regarding further pieces of information related to the user equipment such as the status and/or the capabilities and/or the record of previous usage of the user equipment. The indication related to the current status of the user equipment refers, e.g., to whether the user equipment is in idle mode. The indication related to the capabilities of the user equipment especially refers, e.g. to:
-- the possible set of radio access technologies the user equipment is able to be used (this is especially helpful in case that a base transceiver station regarding a radio access technology should be switched off (especially for energy saving reasons): It should be assured that all user equipments can nevertheless be served, at least by using another radio access technology); and/or
-- the device category of the user equipment, i.e. e.g. whether the user equipment is a machine to machine device or whether the user equipment is enabled for device to device communication (also called peer to peer communication) or whether the user equipment is used in a fixed location (fixed device); and/or
-- the user category assigned to the user equipment (or assigned to the IMSI number), i.e.
whether a gold customer or a silver customer or the like is present in the radio cell.
The indication related to a record of previous usage of the user equipment refers, e.g., to the typical switch off time during a day or the like.

It is furthermore preferred according to the present invention that the transmission of the identity information element in the second step to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Furthermore, the present invention relates to a user equipment for use in a geographic area of an access network of a public land mobile network, wherein the access network comprises at least one base transceiver station, wherein the user equipment receives control signals from the base transceiver station, wherein the user equipment is configured such that an identity information element is sent to the base transceiver station in case that a pool paging information element is received from the base transceiver station.

The user equipment receives the pool paging information element from the base transceiver station and is able to interpret this information element such as to answer by means of an identity information element to be sent to the base transceiver station. It is advantageous according to the present invention that - by means of the information received from the different user equipments - the base transceiver station is able to provide a better and more focused service to the user equipment.

It is furthermore preferred according to the present invention - also with respect to the user equipment - that a pool paging group identifier is assigned to each user equipment of the plurality of user equipments, wherein the user equipment is configured such that the user equipment sends the identity information element solely in case that the assigned pool paging group identifier matches the pool paging group identifier of the received pool paging information element.

According to further preferred embodiments of the present invention - also with respect to the user equipment - it is preferred that the user equipment is configured such that the pool paging group identifier is assigned to the user equipment at the user equipments entering the location area, the registration area and/or the tracking area of the base transceiver station.

It is furthermore preferred according to the present invention that the user equipment is configured such that the transmission of the identity information element to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Additionally, the present invention relates to a base transceiver station for determining the number of user equipments in a geographic area of an access network of a public land mobile network, wherein the access network comprises the base transceiver station, wherein a plurality of user equipments in the geographic area receive control signals from the base transceiver station, wherein the base transceiver station is configured to send a pool paging information element to the plurality of user equipments, wherein the base transceiver station is further configured to receive an identity information element from at least a part of the user equipments of the plurality of user equipments.

The base transceiver station sends the pool paging information element on a paging channel, and is thereby able to reach a plurality of user equipment within the radio cell. The user equipments answer the pool paging information element by means of an identity information element to be sent to the base transceiver station. It is advantageous according to the present invention that - by means of the information received from the different user equipments - the base transceiver station is able to provide a better and more focused service to the user equipment.

It is furthermore preferred according to the present invention - also with respect to the base transceiver station - that a pool paging group identifier is assigned to each user equipment of the plurality of user equipments, wherein the base transceiver station is configured such that the pool paging information element comprises a pool paging group identifier.

Additionally, the present invention relates to a program comprising a computer readable program code which, when executed on a computer or on a user equipment or on a base transceiver station, causes the computer or the user equipment or the base transceiver station to perform the inventive method.

Still additionally, the present invention relates to computer program product for using a user equipment with a base transceiver station, the computer program product comprising a computer program stored on a storage medium, the computer program comprising program code which, when executed on a computer or on the user equipment or on the base transceiver station, causes the computer or the user equipment or the base transceiver station to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a geographic area of a public land mobile network comprising a core network and an access network as well as a plurality of user equipments.
Figure 2 schematically illustrates a communication diagram between a base transceiver station and a user equipment according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

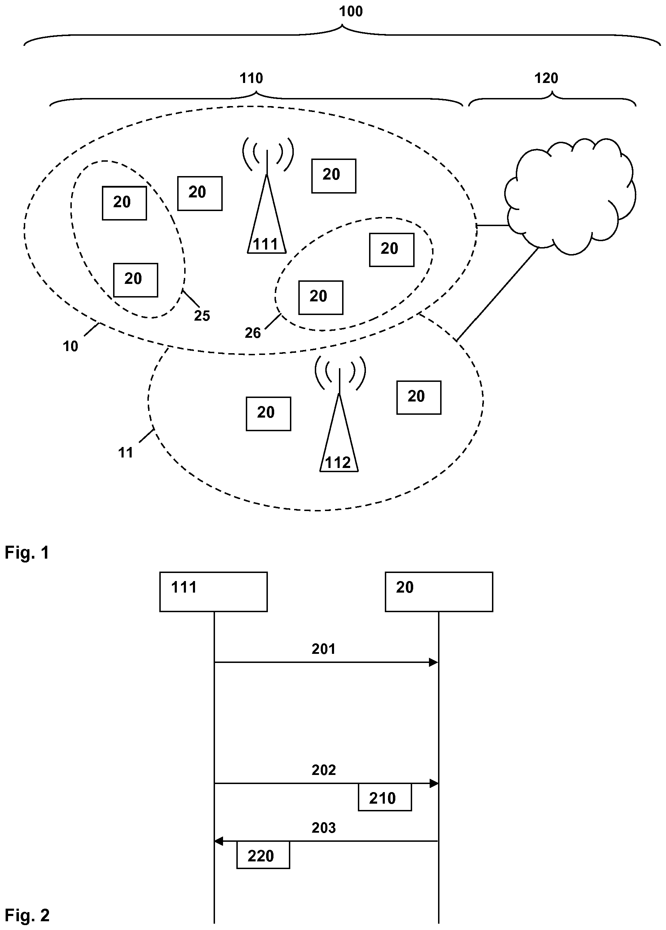

In Figure 1, a geographic area 10 (and a further geographic area 11) of a public land mobile network 100 is schematically shown, the public land mobile network 100 comprising an access network 110 and a core network 120. In the geographic area 10, a plurality of user equipment 20 are located, camping on a radio cell served by a base transceiver station 111 for the geographic area 10. The further geographic area 11 is served by a further base transceiver station 112 and comprises likewise a plurality of user equipments 20.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network element thereof. These network element are hierarchically higher network elements than the base transceiver station 111 or the further base transceiver station 112. In case that the geographic area 10 and the further geographic area 11 belong to the same location area or tracking area of the public land mobile network 100, a conventional paging event of a user equipment would be
-- initiated by the hierarchically higher network elements,
-- be paged both in geographic area 10 and in further geographic area 11, i.e. in the whole of the corresponding location area or tracking area, and
-- directed to user equipments 20 that are individually indicated by the paging request message.

According to the present invention, all these requirements of a conventional paging event does not apply in case that the base transceiver station 111 is sending the new pool paging information element to a plurality of user equipments 20 because
-- the pool paging information element is a message - preferably sent on a paging channel of the base transceiver station 111 - that is solely received within the coverage area of the base transceiver station 111 (i.e. in the geographic area 10) and which is especially not received by the user equipments 20 in the further geographic area 11 (unless the further base transceiver station 112 also sends a pool paging information element message),
-- the trigger for the pool paging information element is the base transceiver station 111 and not the hierarchically higher network elements, and
-- there is no need to individually specify the user equipments that are intended to respond to the pool paging information element, as the information is sent on a paging channel of the base transceiver station.

In order to avoid overload situations when the base transceiver station sends the pool paging information element (especially to avoid all the user equipments of a geographic area 10 sending or trying to send the identity information element simultaneously or quasi-simultaneously), it is possible and preferred according to the present invention to implicitly define groups of user equipments 20 - indicated in Figure 1 by means of reference signs 25 and 26 - such that only the user equipments 20 of these groups 25, 26 of user equipments 20 respond simultaneously or quasi-simultaneously to the pool paging information element. These groups 25, 26 of user equipments 20 typically also comprise a plurality of user equipments 20, however this plurality of user equipments 20 being a subset of all the user equipments 20 within the geographic area 10. The definition of the groups 25, 26 of user equipments 20 (or the definition of the plurality of user equipments 20 being a subset of all the user equipments 20 within the geographic area 10 served by the base transceiver station 111) is possible according to the present invention by means of defining pool paging groups, and by transmitting - preferably as part of the pool paging information element - a pool paging group identifier in order to address not all user equipments 20 within the radio cell but only those user equipments 20 having an assigned pool paging group identifier matching the pool paging group identifier transmitted by the base transceiver station 111 when sending the pool paging information element.

In Figure 2, a communication diagram between the base transceiver station 111 and a user equipment 20 according to the present invention is schematically shown.

The premise is that the user equipment 20 is camping on the radio cell served by the base transceiver station 111. This means that control signals 201, 202 are sent from the base transceiver station 111 to the user equipment 20 (or the user equipment 20 is obliged to hear (i.e. tune its antenna(e) and radio frequency circuitry to) the control signals 201, 202. Camping on the radio cell served by the base transceiver station 111 can either be initiated in case that the user equipment 20 has previously been served by another base transceiver station 112, i.e. the user equipment 20 has moved from the further geographic area 11 to the geographic area 10, or the user equipment 20 has been turned on when being present in the geographic area 10. Camping on the radio cell of the base transceiver station 111 means that the paging channel of the base transceiver station 111 is received by the user equipment 20 which is represented in Figure 2 by means of control signal 201. In a situation that the base transceiver station 111 needs to determine the number of user equipments 20 in the geographic area 10, a modified signal 202 on the paging channel is sent comprising the pool paging information element 210. The reception of the pool paging information element 210 by the user equipment 20 triggers the emission of answer 203 of the user equipment 20, comprising the identity information element 220. The identity information element 220 preferably comprises not only the information that the user equipment 20 exists but also additional information such as
-- an indication related to the current status of the user equipment 20, and/or
-- an indication related to the capabilities of the user equipment 20, and/or
-- an indication related to a record of previous usage of the user equipment 20.

Thereby, it is possible according to the present invention that the base transceiver station 111 processes the information returned by the identity information elements 220 from the plurality of user equipments 20.

## Claims

1. Method for determining the number of user equipments (20) in a geographic area (10) of an access network (110) of a public land mobile network (100), wherein the access network (110) comprises at least one base transceiver station (111), wherein a plurality of user equipments (20) in the geographic area (10) receive control signals (201, 202) from the base transceiver station (111), the method comprises the following steps:
-- in a first step, a pool paging information element (210) is sent from the base transceiver station (111) to the plurality of user equipments (20),
-- in a second step, an identity information element (220) is sent to the base transceiver station (111) by at least a part of the user equipments (20) of the plurality of user equipments (20), **characterized in that** the identity information element (220) comprises an indication related to the identity of the user equipment (20) and at least one out of the following pieces of information:
-- an indication related to the capabilities of the user equipment (20), wherein the indication related to the capabilities of the user equipment (20) relates to an information regarding to the possible set of radio access technologies the user equipment (20) is able to use,
-- an indication related to a record of previous usage of the user equipment (20).

2. Method according to claim 1, wherein the plurality of user equipments (20) are in a passive state or in a passive mode of operation.

3. Method according to any the preceding claims, wherein the pool paging information element (210) is sent on a paging channel of the base transceiver station (111).

4. Method according to any the preceding claims, wherein each user equipment (20) of the plurality of user equipments (20) is assigned to a pool paging group identifier, wherein the pool paging information element (210) comprises the pool paging group identifier, wherein a user equipment (20) of plurality of user equipments (20) sends the identity information element (220) solely in case that the assigned pool paging group identifier matches the pool paging group identifier of the pool paging information element (210).

5. Method according to any the preceding claims, wherein each user equipment is assigned to a pool paging group identifier (20) of the plurality of user equipments (20) at the user equipments (20) entering the location area, the registration area and/or the tracking area of the base transceiver station (111).

6. Method according to any the preceding claims,
wherein the indication related to the capabilities of the user equipment (20) further relates to an information regarding to: the device category of the user equipment (20), and/or the user category assigned to the user equipment (20).

7. Method according to any the preceding claims, wherein the identity information element (220) further comprises the following pieces of information:
-- an indication related to the current status of the user equipment (20).

8. User equipment (20) for use in a geographic area (10) of an access network (110) of a public land mobile network (100), wherein the access network (110) comprises at least one base transceiver station (111), wherein the user equipment (20) receives control signals (201, 202) from the base transceiver station (111), the user equipment (20) is configured such that an identity information element (220) is sent to the base transceiver station (111) in case that a pool paging information element (210) is received from the base transceiver station (111), **characterized in that** the identify information element (220) comprises an indication related to the identity of the user equipment (20) and at least one out of the following pieces of information:
-- an indication related to the capabilities of the user equipment (20), wherein the indication related to the capabilities of the user equipment (20) relates to an information regarding to the possible set of radio access technologies the user equipment (20) is able to use,
-- an indication related to a record of previous usage of the user equipment (20).

9. User equipment (20) according to claim 8, wherein a pool paging group identifier is assigned to each user equipment (20) of the plurality of user equipments (20), wherein the user equipment (20) is configured such that the user equipment (20) sends the identity information element (220) solely in case that the assigned pool paging group identifier matches the pool paging group identifier of the received pool paging information element (210).

10. User equipment (20) according to claim 8 or 9, wherein the user equipment (20) is configured such that the pool paging group identifier is assigned to the user equipment (20) at the user equipments (20) entering the location area, the registration area and/or the tracking area of the base transceiver station (111).

11. Base transceiver station (111) for determining the number of user equipments (20) in a geographic area (10) of an access network (110) of a public land mobile network (100), wherein the access network (110) comprises the base transceiver station (111), wherein a plurality of user equipments (20) in the geographic area (10) receive control signals (201, 202) from the base transceiver station (111), **characterized in that** the base transceiver station (111) is configured to send a pool paging information element (210) to the plurality of user equipments (20), wherein the base transceiver station (111) is further configured to receive an identity information element (220) from at least a part of the user equipments (20) of the plurality of user equipments (20), **characterized in that** the identity information element (220) comprises an indication related to the identity of the user equipment (20) and at least one out of the following pieces of information:
-- an indication related to the capabilities of the user equipment (20), wherein the indication related to the capabilities of the user equipment (20) relates to an information regarding to the possible set of radio access technologies the user equipment (20) is able to use,
-- an indication related to a record of previous usage of the user equipment (20).

12. Base transceiver station (111) according to claim 11, wherein a pool paging group identifier is assigned to each user equipment (20) of the plurality of user equipments (20), wherein the base transceiver station (111) is configured such that the pool paging information element (210) comprises a pool paging group identifier.

13. Program comprising a computer readable program code which, when executed on a computer or on a user equipment (20) or on a base transceiver station (111), causes the computer or the user equipment (20) or the base transceiver station (111) to perform a method according one of claims 1 to 7.

14. Computer program product for using a user equipment (20) with a base transceiver station (111), the computer program product comprising a computer program stored on a storage medium, the computer program comprising program code which, when executed on a computer or on the user equipment (20) or on the base transceiver station (111), causes the computer or the user equipment (20) or the base transceiver station (111) to perform a method according one of claims 1 to 7.

## Patentansprüche

1. Verfahren zum Bestimmen der Anzahl von Nutzerausrüstungen (20) in einem geografischen Gebiet (10) eines Zugangsnetzwerks (110) eines öffentlichen landgestützten Mobilfunknetzes (100), wobei das Zugangsnetzwerk (110) mindestens eine Basis-Transceiverstation (111) umfasst, wobei mehrere Nutzerausrüstungen (20) in dem geografischen Gebiet (10) Steuersignale (201, 202) von der Basis-Transceiverstation (111) empfangen, wobei das Verfahren die folgenden Schritte umfasst:
- in einem ersten Schritt wird ein Pool-Paging-Informationselement (210) von der Basis-Transceiverstation (111) zu den mehreren Nutzerausrüstungen (20) gesendet,
- in einem zweiten Schritt wird ein Identitäts-Informationselement (220) zu der Basis-Transceiverstation (111) durch mindestens einen Teil der Nutzerausrüstungen (20) der mehreren Nutzerausrüstungen (20) gesendet,
**dadurch gekennzeichnet, dass** das Identitäts-Informationselement (220) einen Hinweis auf die Identität der Nutzerausrüstung (20) und mindestens eine der folgenden Informationen umfasst:
- einen Hinweis auf die Fähigkeiten der Nutzerausrüstung (20), wobei der Hinweis auf die Fähigkeiten der Nutzerausrüstung (20) eine Information zu dem möglichen Satz Funkzugangstechnologien betrifft, welche die Nutzerausrüstung (20) zu verwenden in der Lage ist,
- einen Hinweis auf eine Aufzeichnung über die frühere Verwendung der Nutzerausrüstung (20).

2. Verfahren nach Anspruch 1, wobei die mehreren Nutzerausrüstungen (20) in einem passiven Zustand oder in einem passiven Betriebmodus sind.

3. Verfahren nach einem der vorangehenden Ansprüche, wobei das Pool-Paging-Informationselement (210) auf einem Paging-Kanal der Basis-Transceiverstation (111) gesendet wird.

4. Verfahren nach einem der vorangehenden Ansprüche, wobei jede Nutzerausrüstung (20) der mehreren Nutzerausrüstungen (20) einem Pool-Paging-Gruppen-Identifikator zugewiesen wird, wobei das Pool-Paging-Informationselement (210) den Pool-Paging-Gruppen-Identifikator umfasst, wobei eine Nutzerausrüstung (20) von mehreren Nutzerausrüstungen (20) das Identitäts-Informationselement (220) allein für den Fall sendet, dass der zugewiesene Pool-Paging-Gruppen-Identifikator mit dem Pool-Paging-Gruppen-Identifikator des Pool-Paging-Informationselements (210) übereinstimmt.

5. Verfahren nach einem der vorangehenden Ansprüche, wobei jede Nutzerausrüstung einem Pool-Paging-Gruppen-Identifikator (20) der mehreren Nutzerausrüstungen (20) bei den Nutzerausrüstungen (20) zugewiesen wird, die in das Standortgebiet, das Registrierungsgebiet und/oder das Verfolgungsgebiet der Basis-Transceiverstation (111) eintreten.

6. Verfahren nach einem der vorangehenden Ansprüche, wobei der Hinweis auf die Fähigkeiten der Nutzerausrüstung (20) des Weiteren eine Informationen über Folgendes betrifft: die Gerätekategorie der Nutzerausrüstung (20) und/oder die Nutzerkategorie, die der Nutzerausrüstung (20) zugewiesen wird.

7. Verfahren nach einem der vorangehenden Ansprüche, wobei das Identitäts-Informationselement (220) des Weiteren die folgenden Informationen umfasst:
- einen Hinweis auf den momentanen Status der Nutzerausrüstung (20).

8. Nutzerausrüstung (20) zur Verwendung im einem geografischen Gebiet (10) eines Zugangsnetzwerks (110) eines öffentlichen landgestützten Mobilfunknetzes (100), wobei das Zugangsnetzwerk (110) mindestens eine Basis-Transceiverstation (111) umfasst, wobei die Nutzerausrüstung (20) Steuersignale (201, 202) von der Basis-Transceiverstation (111) empfängt, wobei die Nutzerausrüstung (20) so ausgestaltet ist, dass ein Identitäts-Informationselement (220) zu der Basis-Transceiverstation (111) für den Fall gesendet wird, dass ein Pool-Paging-Informationselement (210) von der Basis-Transceiverstation (111) empfangen wird, **dadurch gekennzeichnet, dass** das Identifizierungs-Informationselement (220) einen Hinweis auf die Identität der Nutzerausrüstung (20) und mindestens eine der folgenden Informationen umfasst:
- einen Hinweis auf die Fähigkeiten der Nutzerausrüstung (20), wobei der Hinweis auf die Fähigkeiten der Nutzerausrüstung (20) eine Information zu dem möglichen Satz Funkzugangstechnologien betrifft, welche die Nutzerausrüstung (20) zu verwenden in der Lage ist,
- einen Hinweis auf eine Aufzeichnung über die frühere Verwendung der Nutzerausrüstung (20).

9. Nutzerausrüstung (20) nach Anspruch 8, wobei jeder Nutzerausrüstung (20) der mehreren Nutzerausrüstungen (20) ein Pool-Paging-Gruppen-Identifikator zugewiesen wird, wobei die Nutzerausrüstung (20) so ausgestaltet ist, dass die Nutzerausrüstung (20) das Identitäts-Informationselement (220) allein für den Fall sendet, dass der zugewiesene Pool-Paging-Gruppen-Identifikator mit dem Pool-Paging-Gruppen-Identifikator des empfangenen Pool-Paging-Informationselements (210) übereinstimmt.

10. Nutzerausrüstung (20) nach Anspruch 8 oder 9, wobei die Nutzerausrüstung (20) so ausgestaltet ist, dass der Pool-Paging-Gruppen-Identifikator der Nutzerausrüstung (20) unter den Nutzerausrüstungen (20) zugewiesen wird, die in das Standortgebiet, das Registrierungsgebiet und/oder das Verfolgungsgebiet der Basis-Transceiverstation (111) eintritt.

11. Basis-Transceiverstation (111) zum Bestimmen der Anzahl von Nutzerausrüstungen (20) in einem geografischen Gebiet (10) eines Zugangsnetzwerks (110) eines öffentlichen landgestützten Mobilfunknetzes (100), wobei das Zugangsnetzwerk (110) die Basis-Transceiverstation (111) umfasst, wobei mehrere Nutzerausrüstungen (20) in dem geografischen Gebiet (10) Steuersignale (201, 202) von der Basis-Transceiverstation (111) empfangen, **dadurch gekennzeichnet, dass** die Basis-Transceiverstation (111) dafür ausgestaltet ist, ein Pool-Paging-Informationselement (210) zu den mehreren Nutzerausrüstungen (20) zu senden, wobei die Basis-Transceiverstation (111) des Weiteren dafür ausgestaltet ist, ein Identitäts-Informationselement (220) von mindestens einem Teil der Nutzerausrüstungen (20) der mehreren Nutzerausrüstungen (20) zu empfangen, **dadurch gekennzeichnet, dass** das Identitäts-Informationselement (220) einen Hinweis auf die Identität der Nutzerausrüstung (20) und mindestens eine der folgenden Informationen umfasst:
- einen Hinweis auf die Fähigkeiten der Nutzerausrüstung (20), wobei der Hinweis auf die Fähigkeiten der Nutzerausrüstung (20) eine Information zu dem möglichen Satz Funkzugangstechnologien betrifft, welche die Nutzerausrüstung (20) zu verwenden in der Lage ist,
- einen Hinweis auf eine Aufzeichnung über die frühere Verwendung der Nutzerausrüstung (20).

12. Basis-Transceiverstation (111) nach Anspruch 11, wobei jeder Nutzerausrüstung (20) der mehreren Nutzerausrüstungen (20) ein Pool-Paging-Gruppen-Identifikator zugewiesen wird, wobei die Basis-Transceiverstation (111) so ausgestaltet ist, dass das Pool-Paging-Informationselement (210) einen Pool-Paging-Gruppen-Identifikator umfasst.

13. Programm, das einen computerlesbaren Programmcode umfasst, der, wenn er auf einem Computer oder in einer Nutzerausrüstung (20) oder in einer Basis-Transceiverstation (111) ausgeführt wird, veranlasst, dass der Computer oder die Nutzerausrüstung (20) oder die Basis-Transceiverstation (111) ein Verfahren nach einem der Ansprüche 1 bis 7 ausführt.

14. Computerprogrammprodukt zur Verwendung einer Nutzerausrüstung (20) mit einer Basis-Transceiverstation (111), wobei das Computerprogrammprodukt ein Computerprogramm umfasst, das auf einem Speichermedium gespeichert ist, wobei das Computerprogramm Programmcode umfasst, der, wenn er auf einem Computer oder in der Nutzerausrüstung (20) oder in der Basis-Transceiverstation (111) ausgeführt wird, veranlasst, dass der Computer oder die Nutzerausrüstung (20) oder die Basis-Transceiverstation (111) ein Verfahren nach einem der Ansprüche 1 bis 7 ausführt.

## Revendications

1. Procédé pour déterminer le nombre d'équipements d'utilisateurs (20) dans une zone géographique (10) d'un réseau d'accès (110) d'un réseau mobile terrestre public (100), dans lequel le réseau d'accès (110) comprend au moins une station émettrice-réceptrice de base (111), dans lequel une pluralité d'équipements d'utilisateurs (20) dans la zone géographique (10) reçoivent des signaux de commande (201, 202) à partir de la station émettrice-réceptrice de base (111), le procédé comprenant les étapes suivantes :
- dans une première étape, un élément d'information de radiomessagerie de réserve (210) est envoyé à partir de la station émettrice-réceptrice de base (111) à la pluralité d'équipements d'utilisateurs (20),
- dans une seconde étape, un élément d'information d'identité (220) est envoyé à la station émettrice-réceptrice de base (111) par au moins une partie des équipements d'utilisateurs (20) de la pluralité d'équipements d'utilisateurs (20),
**caractérisé en ce que** l'élément d'information d'identité (220) comprend une indication relative à l'identité de l'équipement d'utilisateur (20) et au moins l'un parmi les éléments d'information suivants :
- une indication relative aux capacités de l'équipement d'utilisateur (20), dans laquelle l'indication relative aux capacités de l'équipement d'utilisateur (20) concerne une information concernant l'ensemble possible de technologies d'accès radio que l'équipement d'utilisateur (20) est en mesure d'utiliser,
- une indication relative à un enregistrement de l'utilisation antérieure de l'équipement d'utilisateur (20).

2. Procédé selon la revendication 1, dans lequel la pluralité d'équipements d'utilisateurs (20) est dans un état passif ou dans un mode de fonctionnement passif.

3. Procédé selon l'une quelconque des revendications précédentes, dans lequel l'élément d'information de radiomessagerie de réserve (210) est envoyé sur un canal de radiomessagerie de la station émettrice-réceptrice de base (111).

4. Procédé selon l'une quelconque des revendications précédentes, dans lequel chaque équipement d'utilisateur (20) de la pluralité d'équipements d'utilisateurs (20) est affecté à un identificateur de groupe de radiomessagerie de réserve, dans lequel l'élément d'information de radiomessagerie de réserve (210) comprend l'identificateur de groupe de radiomessagerie de réserve, dans lequel un équipement d'utilisateur (20) de la pluralité d'équipements d'utilisateurs (20) envoie l'élément d'information d'identité (220) uniquement dans le cas où l'identificateur de groupe de radiomessagerie de réserve attribué correspond à l'identificateur de groupe de radiomessagerie de réserve de l'élément d'information de radiomessagerie de réserve.

5. Procédé selon l'une quelconque des revendications précédentes, dans lequel chaque équipement d'utilisateur est affecté à un identificateur de groupe de radiomessagerie de réserve (20) de la pluralité d'équipements d'utilisateurs (20) lorsque les équipements d'utilisateurs (20) entrent dans la zone de localisation, la zone d'enregistrement et/ou la zone de suivi de la station émettrice-réceptrice de base (111).

6. Procédé selon l'une quelconque des revendications précédentes,
dans lequel l'indication relative aux capacités de l'équipement d'utilisateur (20) concerne en outre une information concernant : la catégorie de dispositif de l'équipement d'utilisateur (20), et/ou la catégorie d'utilisateur attribuée à l'équipement d'utilisateur (20).

7. Procédé selon l'une quelconque des revendications précédentes, dans lequel l'élément d'information d'identité (220) comprend en outre les éléments d'information suivants :
- une indication relative à l'état actuel de l'équipement d'utilisateur (20).

8. Équipement d'utilisateur (20) destiné à être utilisé dans une zone géographique (10) d'un réseau d'accès (110) d'un réseau mobile terrestre public (100), dans lequel le réseau d'accès (110) comprend au moins une station émettrice-réceptrice de base (111), dans lequel l'équipement d'utilisateur (20) reçoit des signaux de commande (201, 202) à partir de la station émettrice-réceptrice de base (111), l'équipement d'utilisateur (20) est configuré de sorte qu'un élément d'information d'identité (220) soit envoyé à la station émettrice-réceptrice de base (111) au cas où un élément d'information de radiomessagerie de réserve (210) est reçu à partir de la station émettrice-réceptrice de base (111), **caractérisé en ce que** l'élément d'information d'identité (220) comprend une indication relative à l'identité de l'équipement d'utilisateur (20) et au moins l'un parmi les éléments d'information suivants :
- une indication relative aux capacités de l'équipement d'utilisateur (20), dans laquelle l'indication relative aux capacités de l'équipement d'utilisateur (20) concerne une information concernant l'ensemble possible de technologies d'accès radio que l'équipement d'utilisateur (20) est en mesure d'utiliser,
- une indication relative à un enregistrement de l'utilisation antérieure de l'équipement d'utilisateur (20).

9. Équipement d'utilisateur (20) selon la revendication 8, dans lequel un identificateur de groupe de radiomessagerie de réserve est attribué à chaque équipement d'utilisateur (20) de la pluralité d'équipements d'utilisateurs (20), dans lequel l'équipement d'utilisateur (20) est configuré de sorte que l'équipement d'utilisateur (20) envoie l'élément d'information d'identité (220) uniquement dans le cas où l'identificateur de groupe de radiomessagerie de réserve attribué correspond à l'identificateur de groupe de radiomessagerie de réserve de l'élément d'information de radiomessagerie de réserve reçu (210).

10. Équipement utilisateur (20) selon la revendication 8 ou 9, dans lequel l'équipement d'utilisateur (20) est configuré de sorte que l'identificateur de groupe de radiomessagerie de réserve soit affecté à l'équipement d'utilisateur (20) lorsque les équipements d'utilisateurs (20) entrent dans la zone de localisation, la zone d'enregistrement et/ou la zone de suivi de la station émettrice-réceptrice de base (111).

11. Station émettrice-réceptrice de base (111) pour déterminer le nombre d'équipements d'utilisateurs (20) dans une zone géographique (10) d'un réseau d'accès (110) d'un réseau mobile terrestre public (100), dans laquelle le réseau d'accès (110) comprend la station émettrice-réceptrice de base (111), dans laquelle une pluralité d'équipements d'utilisateurs (20) dans la zone géographique (10) reçoivent des signaux de commande (201, 202) à partir de la station émettrice-réceptrice de base (111), **caractérisée en ce que** la station émettrice-réceptrice de base (111) est configurée pour envoyer un élément d'information de radiomessagerie de réserve (210) à la pluralité d'équipements d'utilisateurs (20), dans laquelle la station d'émission-réception de base (111) est en outre configurée pour recevoir un élément d'information d'identité (220) à partir d'au moins une partie des équipements d'utilisateurs (20) de la pluralité d'équipements d'utilisateurs (20), **caractérisée en ce que** l'élément d'information d'identité (220) comprend une indication relative à l'identité de l'équipement d'utilisateur (20) et au moins l'un parmi les éléments d'information suivants :
- une indication relative aux capacités de l'équipement d'utilisateur (20), dans laquelle l'indication relative aux capacités de l'équipement d'utilisateur (20) concerne une information concernant l'ensemble possible de technologies d'accès radio que l'équipement d'utilisateur (20) est en mesure d'utiliser,
- une indication relative à un enregistrement de l'utilisation antérieure de l'équipement d'utilisateur (20).

12. Station émettrice-réceptrice de base (111) selon la revendication 11, dans laquelle un identificateur de groupe de radiomessagerie de réserve est affecté à chaque équipement d'utilisateur (20) de la pluralité d'équipements d'utilisateurs (20), dans laquelle la station émettrice-réceptrice de base (111) est configurée de sorte que l'élément d'information de radiomessagerie de réserve (210) comprenne un identificateur de groupe de radiomessagerie de réserve.

13. Programme comprenant un code de programme lisible par ordinateur qui, lorsqu'il est exécuté sur un ordinateur ou sur un équipement d'utilisateur (20) ou sur une station émettrice-réceptrice de base (111), amène l'ordinateur ou l'équipement d'utilisateur (20) ou la station émettrice-réceptrice de base (111) à effectuer un procédé selon l'une des revendications 1 à 7.

14. Produit programme d'ordinateur pour utiliser un équipement d'utilisateur (20) avec une station émettrice-réceptrice de base (111), le programme d'ordinateur comprenant un programme d'ordinateur stocké sur un support de stockage, le programme d'ordinateur comprenant un code de programme qui, lorsqu'il est exécuté sur un ordinateur ou sur l'équipement d'utilisateur (20) ou sur la station émettrice-réceptrice de base (111), amène l'ordinateur ou l'équipement d'utilisateur (20) ou la station émettrice-réceptrice de base (111) à exécuter un procédé selon l'une des revendications 1 à 7.
